# EUROPÄISCHE PATENTSCHRIFT

(11) **EP 2 087 334 B1**
(45) Veröffentlichungstag und Bekanntmachung des Hinweises auf die Patenterteilung: **12.10.2011**
(21) Anmeldenummer: 07816239.3
(22) Anmeldetag: 12.11.2007
(51) Int. Cl.: G01L 27/00

(54) **DRUCKSENSOR MIT INTEGRIERTER PRÜFVORRICHTUNG UND VERFAHREN ZUM PRÜFEN EINES SOLCHEN SENSORS**
PRESSURE SENSOR WITH INTEGRATED TEST DEVICE AND METHOD FOR TESTING SUCH A SENSOR
CAPTEUR DE PRESSION COMPRENANT UN DISPOSITIF DE VÉRIFICATION INTÉGRÉ ET PROCÉDÉ POUR VÉRIFIER UN TEL CAPTEUR

(30) Priorität: 10.11.2006 AT 18652006
(43) Veröffentlichungstag der Anmeldung: 12.08.2009
(73) Patentinhaber: Kistler Holding AG, 8408 Winterthur (CH)
(72) Erfinder: GLASER, Josef, 8047 Graz (AT)
(86) Internationale Anmeldenummer: PCT/CH2007/000556
(87) Internationale Veröffentlichungsnummer: WO 2008/055376

(56) Entgegenhaltungen:
- WO-A-98/19145
- DE-A1- 1 908 633
- DE-A1-102004 019 222

## Beschreibung

### Technisches Gebiet

Die Erfindung betrifft einen Drucksensor umfassend ein Gehäuse, eine Membrane sowie mindestens ein Messelement zum Messen eines von ausserhalb des Gehäuses auf die Membrane wirkenden Drucks, weiter umfassend ein Kanalsystem innerhalb des Gehäuses, das mit einem Prüfmedium gefüllt werden kann. Des weiteren betrifft diese Erfindung ein Verfahren zum Überprüfen der Güte und zum Kalibrieren eines solchen Sensors.

### Stand der Technik

Gewisse Drucksensoren müssen sehr zuverlässig und genau Druck über lange Zeit messen. Dies betrifft insbesondere Drucksensoren, die über lange Zeit in einem Bauteil, beispielsweise in einem Motor oder einem Maschinenteil, eingebaut sind und ständig Prozesse überwachen.

Da sich Sensoren mit der Zeit ändern können, muss deren Funktion jeweils entweder im ausgebauten Zustand an geeigneten Kalibriergeräten geprüft werden, oder es muss durch dem Sensor vorgeschaltete Ventile die Möglichkeit geschaffen werden, vom Messdruck auf einen Prüfdruck umzuschalten. In jedem Fall wird ein Sensor für die Kalibrierung jeweils immer in gleicher weise druckbelastet.

Zum Beaufschlagen solcher Prüfdrücke sind Ventile nötig, welche das Totvolumen vor dem Sensor vergrössern, die Zuleitung verlängern und damit vor allem bei Druckmessungen in Gasen starke Resonanzschwingungen und Pfeifenschwingungen verursachen. Bei heissen und schmutzigen Prozessen ist die zuverlässige Funktion solcher Ventile kaum zu gewährleisten und die langen Zulaufkanäle werden häufig durch Schmutzablagerungen verschlossen.

In der DE 102004019222 wird eine Sensoranordnung angegeben, bei welcher in einer Druckkammer innerhalb des Sensors durch eine elektrische Ansteuerung eine Volumenänderung durch ein integriertes Prüfelement erzeugt wird. Nachteilig an dieser Anordnung ist, dass bei einer Abweichung nicht festgestellt werden kann, ob das Prüfelement oder das Messelement fehlerhaft ist.

Bei der WO 98/19145 und bei der DE 1908633 werden jeweils Anordnungen beschrieben, welche eine Membrane zwischen dem Raum des Messdrucks und einem inneren Druckraum aufweisen, wonach stets Differenzmessungen durchgeführt werden. So kann auf den inneren Druckraum ein zusätzlicher Druck appliziert werden, um das Messelement auf eine allfällige Abweichung hin zu überprüfen. Nachteilig an dieser Anordnung ist einerseits, dass eine Membrane in der Regel nicht auf beide Seiten linear verläuft, womit ein Fehler in der Prüfmessung aufgenommen wird. Andererseits hat die Druckkammer durch das darin befindliche Fluid eine kühlende Wirkung auf die Membran, sobald diese zu strömen beginnt. Da die Membrantemperatur einen Einfluss auf die Messung hat und diese Strömung nur schwer zu kontrollieren ist, ist diese Art der Überprüfung ebenfalls ungenau.

### Darstellung der Erfindung

Die Aufgabe der vorliegenden Erfindung ist es, einen Drucksensor anzugeben, der geprüft und/oder kalibriert werden kann, ohne dass störanfällige Ventile vor dem Sensor angebracht sind und möglichst ohne grosse Schadräume oder lange Kanäle zwischen Sensor und Druckmessraum. Zudem soll ein Verfahren angegeben werden zum Prüfen eines solchen Sensors, wobei die Prüfung im eingebauten Zustand durchgeführt werden soll, ohne dass die Membrane von aussen zugänglich sein muss.

Die Aufgabe wird dadurch gelöst, dass der Drucksensor über eine integrierte Prüfvorrichtung verfügt, durch die ein definierter Prüfdruck Dp in einer Druckkammer im Sensorgehäuse erzeugt werden kann, der eine bekannte Druckänderung D1 im Messelement erzeugen soll. Durch den Vergleich einer tatsächlich auftretenden Druckänderung D2 zu der erwarteten, bekannten Druckänderung D1 kann auf die Güte des Drucksensors geschlossen und dieser entsprechend kalibriert werden.

Dieses Prüfverfahren ist insbesondere auch bei laufender Druckmessung möglich.

### Kurze Beschreibung der Zeichnungen

Im Folgenden wird die Erfindung unter Beizug der Zeichnungen näher erklärt. Es zeigen
- Fig. 1: eine schematische Darstellung im Querschnitt eines erfindungsgemässen Drucksensors mit einer Druckkammer und einem piezoelektrischem oder piezoresistivem Messelement;
- Fig. 2: eine schematische Darstellung im Querschnitt eines erfindungsgemässen Drucksensors in einer alternativen Ausführung;

Die Bezugszeichen sind jeweils in allen Figuren beigehalten.

### Wege zur Ausführung der Erfindung

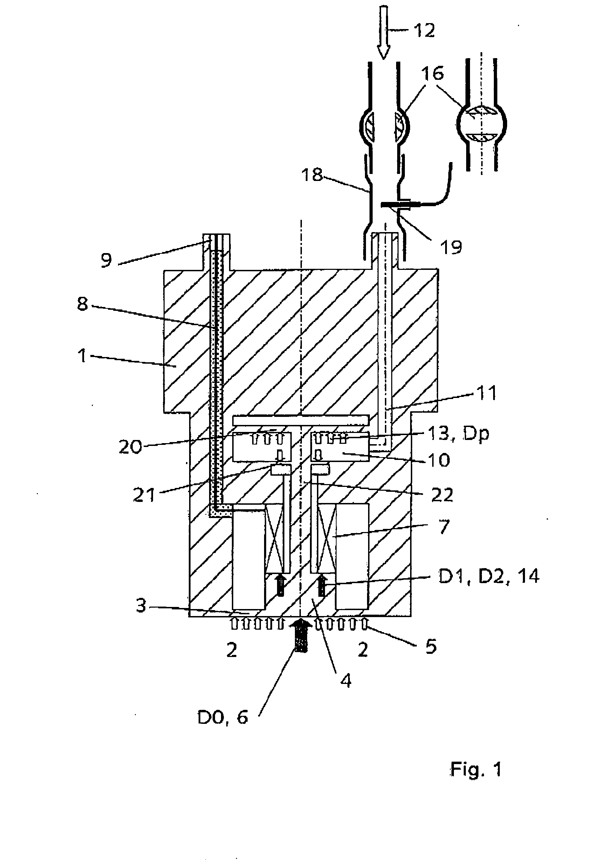

Fig. 1 zeigt einen Drucksensor im Querschnitt mit einem Gehäuse 1, einer Membrane 3 sowie mit einem Messelement 7 zum Messen eines von einem Druckraum 2 ausserhalb des Gehäuses 1 auf die Membrane 3 wirkenden Drucks 5. Dieser Druck 5 wirkt mit einer resultierenden Kraft 6 auf eine Druckplatte 4, welche wiederum eine Kraft auf das Messelement 7 ausübt. Von diesem Messelement 7 führt eine Messleitung 8 rückseitig zu einem Anschluss 9 für eine Verbindung zum Übertragen der Messsignale.

Das Messelement 7 ist in dieser Ausführungsform geteilt oder holzylindrisch und die Druckplatte 4 weist einen Fortsatz 22 auf, der bis hinter das Messelement 7 führt, sodass sowohl eine Trennmembrane 21 als auch ein Vorspannelement 20, die beide am Fortsatz 22 angebracht sind, hinter dem Messelement 7 angeordnet werden können.

Zudem umfasst der Drucksensor eine Zuleitung 11, durch welche ein Prüfmedium 12 zu einer Druckkammer 10 vorstossen kann. Ein Sensor 19 innerhalb der Leitung 11 kann einen Prüfdruck Dp ermitteln. Zuleitung 11 und Druckkammer 10 bilden zusammen ein Kanalsystem. An der Leitung 11 kann ausserhalb des Gehäuses 1, beispielsweise als Zwischenstück, eine elastische Leitung 18 angebracht sein, welche das Handling vereinfacht. Ein Ventil 16 an der Leitung 11 lässt die Leitung 11 verschliessen.

Dadurch kann ein in der Leitung 11 angebrachter Prüfdruck Dp aufrecht erhalten bleiben, der, dargestellt in Pfeilen 13, in der Druckkammer 10 wirkt. Dieser Druck 13 wirkt über den Fortsatz der Druckplatte 22 als resultierender Prüfdruck 14 auf das Messelement 7 von deren Innenseite her, das heisst, in gleiche Richtung wie der Gesamtdruck 6 aus dem Druckraum 2.

In dieser Ausführungsform ist die Druckkammer 10 zwischen der Trennmembrane 21 und dem Vorspannelement 20, das ebenfalls eine Membrane ist, angeordnet.

Die Druckkammer 10 ist derart im Gehäuse angeordnet, dass der darin angebrachte definierte Prüfdruck Dp eine bekannte Druckänderung D1 im Messelement 7 erzeugt. Diese Druckänderung D1 bezieht sich auf einen allenfalls aussen der Membrane her wirkenden Druck, der kurz vor der Aufbringung des Prüfdrucks ebenfalls ermittelt wird.

Eine Prüfung des Sensors zu einem späteren Zeitpunkt kann in eingebautem Zustand durchgeführt werden, sogar während einer Messung. Dazu wird das Prüfmedium 12 im Kanalsystem 11, 10 mit dem vorgegebenen Prüfdruck Dp beaufschlagt und die durch den Prüfdruck Dp erzeugte, am Messelement 7 ermittelte Druckänderung D2 mit der zu erwartenden, bekannten Druckänderung D1 im Messelement 7 verglichen (D1-D2). Bei Abweichungen vom erwarteten Wert D1 können so neue Kalibrierdaten ermittelt und in entsprechende Auswertegeräte eingegeben werden. Die Druckänderungen beziehen sich jeweils auf den zur Zeit der Kalibrierung vorherrschenden Druck D0 vom Druckraum.

Die Temperatur des Prüfmediums 12 ist in weiten Grenzen wählbar. Das Ventil 16, das auch hier nötig ist um den vorgegebenen Prüfdruck zu applizieren und anschliessend wieder aufzuheben, arbeitet unter wesentlich günstigeren Bedingungen und zudem zuverlässiger als in denen im Stand der Technik genannten Applikationen. Zudem wird der Prüfdruck nur langsam aufgebracht, sodass die Leitung 11 lang sein kann und dadurch mechanisch und thermisch entkoppelt ist. Dies ist notwendig, wenn der Sensor durch Vibrationen hoch belastet ist. Das so entkoppelte Ventil 16 kann wesentlich billiger ausgeführt werden, wegen dieser deutlich geringeren Anforderung.

Die Minimalausstattung für den Einsatz eines von der Rückseite kalibrierbaren Drucksensors umfasst zumindest eine Zuleitung, die das Prüfmedium zum Sensor führen kann, und ein Ventil 16, das an eine Leitung 11. angeschlossen ist, welche das Prüfmedium zur Druckkammer 10 führt. Piezoelektrische Sensorren, die nicht statisch messen können, werden mit Hilfe von Drucksprüngen kalibriert. Daher ist ein schnell öffnendes Ventil 16 nötig, das über eine kurze Leitung 11 möglichst nur die Druckkammer 10 entleert.

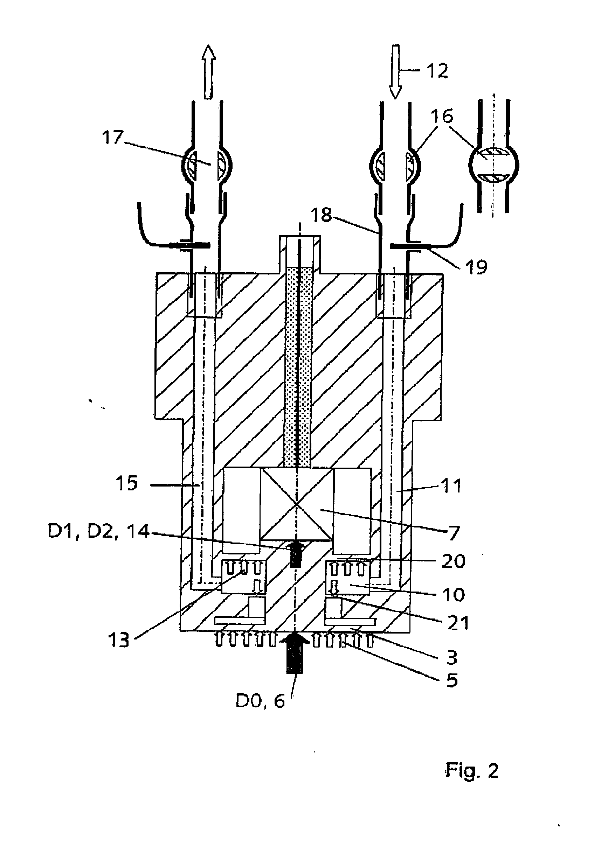

Fig. 2 zeigt einen weiteren erfindungsgemässen Sensor mit einem Messelement 7, das die Druckkräfte auf die Membrane 3 abstützt. Bezüglich Druckmessfunktion ist diese Variante praktisch identisch mit der in Fig. 1 dargestellten Variante. Auch hier wird ein plattenförmiges Vorspannelement 20 verwendet. Zwischen Membrane 3 und Vorspannelement 20 ist eine Trennmembrane 21 angeordnet. Die Leitung 11 führt in die Druckkammer 10 zwischen Vorspannelement 20 und Trennmembrane 21. Der innere Kalibrierdruck 13 auf das Vorspannelement 20 und die Trennmembrane 21 ergibt in diesem Fall wiederum eine resultierende Kraft 14 auf das Messelement 7, die wiederum dieselbe Richtung aufweist wie die Kraft 6 oder der Druck D0 aus dem äusseren Messdruck 5. Diese gleiche Richtung der Kalibrierkräfte kann bei Unlinearitäten des Messelementes ein entscheidender Vorteil sein. Im Unterschied zu Fig. 1 sind hier die Druckkammer 10 sowie das Vorspannelement 20 und die Trennmembrane 21 zwischen Membrane 3 und Messelement 7 angeordnet.

Zudem sind in dieser Ausführungsform zwei Leitungen 11, 15 zum Füllen 11 und Entleeren 15 an der Druckkammer 10 angebracht dargestellt. Entsprechend sind zwei Ventile 16, 17 an beiden Leitungen 11, 15 angebracht. Werden Befüllen und Entleeren des Sensors über je einen Kanal 11, 15 bewerkstelligt, dann kann diese Anordnung für Zusatzfunktionen genutzt werden.

Bei Aufbringen des Prüfdrucks Dp ist das Ventil 17 geschlossen, bei Entlastung vom Prüfdruck Dp oder Umschaltung auf einen anderen Prüfdruck, zum Beispiel den Aussendruck, wird das Ventil 16 geschlossen und das Ventil 17 geöffnet.

Ständiges Durchströmen des Sensors beispielsweise ermöglicht eine Wärmezufuhr in oder Wärmeabfuhr aus dem Sensor und bewirkt dadurch eine Erweiterung des thermischen Funktionsbereichs des Sensors.

Misst man die Temperaturen in Zuleitung 11 und Ableitung 15 an den Sensoren 19, dann erhält man eine Messgrösse für die Wärmebelastung des Sensors und damit auch der Struktur, in welcher der Sensor eingebaut ist.

Die Messung der Durchflussmenge oder der Zusammensetzung des abströmende Gases ermöglicht eine laufende Dichtheitsprüfung des Sensors. Chemische Sensoren oder Durchflusssensoren lassen ebenfalls Undichtigkeit des Sensors erkennen.

Die innere Kalibrierung kann im eingebauten Zustand zur Sensorüberwachung benutzt werden, ohne die äussere Druckmessung zu stören.

### Bezugszeichenliste

- 1: Gehäuse
- 2: Druckraum
- 3: Membrane
- 4: Druckplatte
- 5: Druck
- 6: Gesamtdruck
- 7: Messelement
- 8: Messleitung
- 9: Anschluss
- 10: Druckkammer
- 11: Zuleitung
- 12: Prüfmedium
- 13: Prüfdruck
- 14: Resultierender Prüfdruck
- 15: Leitung zum Abführen des Prüfmediums
- 16: Ventil
- 17: Ventil
- 18: Elastische Leitungen
- 19: Sensor
- 20: Vorspannelement
- 21: Trennmembrane
- 22: Fortsatz der Druckplatte
- Dp: definierter Prüfdruck
- D0: vom Druckraum auf die Membrane wirkender Druck
- D1: bekannte (erwartete) Druckänderung im Messelement, verursacht durch einen in der Druckkammer applizierten definierten Prüfdruck Dp
- D2: tatsächlich gemessene Druckänderung im Messelement, verursacht durch einen in der Druckkammer applizierten definierten Prüfdruck Dp
- D1-D2: Mass für die Nachkalibrierung des Messelements

## Patentansprüche

1. Drucksensor umfassend ein Gehäuse (1), eine Membrane (3) sowie mindestens ein Messelement (7) zum Messen eines von ausserhalb des Gehäuses (1) auf die Membrane (3) wirkenden Drucks (D0), weiter umfassend ein Kanalsystem (11, 10) innerhalb des Gehäusen (1), das mit einem Prüfmedium (12) gefüllt werden kann, wobei das Kanalsystem (11, 10) mindestens eine Druckkammer (10) aufweist, welche derart angeordnet ist, dass ein darin von aussen angebrachter definierter Prüfdruck Dp eine bekannte Druckänderung D1 im Messelement (7) erzeugt, **dadurch gekennzeichnet, dass** beidseitig der Druckkammer (10) innere Membranen (20, 21) an die Druckkammer (10) derart angren zen, dass ein in der Druckkammer (10) beaufschlagter Prüf druck einen resultierenden Druck in Richtung des Messele ments (7) erzeugt.

2. Drucksensor nach Anspruch 1, **dadurch gekennzeichnet, dass** das Messelement (7) ein piezoelektrisches, piezoresistives, kapazitives, optisches oder induktives Messelement oder ein Dehnmessstreifen ist.

3. Drucksensor nach Anspruch 1 oder 2, **dadurch gekennzeichnet, dass** die Druckkammer (10) im Gehäuse (1) hinter dem Messelement (7) bezüglich der Druckrichtung (D0) angeordnet ist.

4. Drucksensor nach Anspruch 1 oder 2, **dadurch gekennzeichnet, dass** die Druckkammer (10) zwischen der Membrane (3) und dem Messelement (7) angeordnet ist.

5. Drucksensor nach einem der vorhergehenden Ansprüche, **dadurch gekennzeichnet, dass** das Kanalsystem (11, 15, 10) mindestens eine Zuleitung (11) und eine Leitung (15) zum Abführen des Mediums enthält.

6. Drucksensor nach einem der vorhergehenden Ansprüche, **dadurch gekennzeichnet, dass** Kanalsystem (11, 15, 10) mindestens ein, vorzugsweise zwei Ventile (16, 17) zum Öffnen und Schliessen des Kanalsystems (11, 10, 15) aufweist.

7. Drucksensor nach einem der vorhergehenden Ansprüche, **dadurch gekennzeichnet, dass** das Kanalsystems (11, 15, 10) mindestens eine, vorzugsweise zwei Sensoren (19) enthält zum Messen von Temperaturen, Drücken und/oder Durchflüssen im Kanalsystem (11, 10, 15).

8. Verfahren zum Überprüfen der Güte eines Sensors nach einem der vorhergehenden Ansprüche, **dadurch gekennzeichnet, dass** bei bekannten Aussendruck D0 auf die Membrane (3)
a) das Prüfmedium (12) im Kanalsystem (11, 15, 10) mit dem vorgegebenen Prüfdruck Dp beaufschlagt wird,
b) die durch den Prüfdruck Dp erzeugte Druckänderung D2 auf dem Messelement (7) ermittelt und mit der zu erwartenden, bekannten Druckänderung D1 im Messelement (7) verglichen wird.
c) und dass anschliessend Kalibrierwerte des Drucksensors auf Grund der ermittelten Druckdifferenz D2-D1 angepasst werden.

## Claims

1. A pressure sensor comprising a housing (1), a membrane (3) as well as at least one measuring element (7) for measuring a pressure (D0) which acts onto the membrane (3) from outside the housing (1), additionally comprising a channel system (11, 10) within the housing (1) which system can be filled with a testing medium (12) wherein said channel system (11, 10) comprises at least one pressure chamber (10) arranged in such a way that a predefined testing pressure Dp applied therein from the outside generates a known pressure change D1 within the measuring element (7), **characterized in that** inner membranes (20, 21) abut against both sides of the pressure chamber (10) so that when the inside of the pressure chamber (10) is charged with a testing pressure a resulting pressure is generated in the direction of the measuring element (7).

2. A pressure sensor according to claim 1 **characterized in that** said measuring element (7) is a piezoelectric, piezoresistive, capacitive, optical or an inductive measuring element or a strain gauge.

3. A pressure sensor according to claim 1 or 2 **characterized in that** the pressure chamber (10) within the housing (1) is arranged behind the measuring element (7) with respect to the direction of the pressure (D0).

4. A pressure sensor according to claim 1 or 2 **characterized in that** the pressure chamber (10) is arranged intermediate the membrane (3) and the measuring element (7).

5. A pressure sensor according to any of the preceding claims **characterized in that** the channel system (11, 15, 10) at least comprises one inlet line (11) and a line (15) for the discharge of the medium.

6. A pressure sensor according to any of the preceding claims **characterized in that** the channel system (11, 15, 10) at least includes one vale, preferably two valves (16, 17) for opening and closing the channel system (11, 15, 10).

7. A pressure sensor according to any of the preceding claims **characterized in that** the channel system (11, 15, 10) at least contains one and preferably two sensors (19) for measuring temperatures, pressures and/or flows in the channel system (11, 15, 10).

8. A method for testing the quality of a sensor according to any of the preceding claims **characterized in that** at a known external pressure (D0) onto the membrane (3)
a) the test medium (12) within the channel system (11, 15, 10) is charged with the predetermined test pressure Dp,
b) the pressure change D2 generated by the test pressure Dp onto the measuring element (7) is determined, and is compared with the expected, known pressure change D1 in the measuring element (7),
c) and **in that** subsequently, calibration values of the pressure sensor are adjusted based on the determined pressure difference D2 - D1.

## Revendications

1. Un capteur de pression comprenant un boîtier (1), une membrane (3) ainsi qu'au moins un élément de mesure (7) pour mesurer une pression (D0) agissant sur la membrane (3) de l'extérieur du boîtier (1), en outre comprenant un système de canaux (11, 10) au sein du boîtier (1) ledit système étant apte à être rempli avec un milieu d'essai (12), dans lequel ledit système de canaux (11, 10) comprend au moins une chambre de pression (10) disposée de manière qu'une pression d'essai Dp prédéfinie y appliquée de l'extérieur produit un changement de pression D1 connu au sein de l'élément de mesure (7), **caractérisé en ce que** des membranes internes (20, 21) avoisinent les deux cotés de la chambre de pression (10) de sorte que lorsque l'intérieur de la chambre de pression (10) est pressurisé avec une pression d'essai, cela engendre une pression résultante dans la direction de l'élément de mesure (7).

2. Un capteur de pression selon la revendication 1 **caractérisé en ce que** ledit élément de mesure (7) est un élément de mesure piézoélectrique, piézorésistif, capacitif, inductif ou optique ou un jauge de contrainte.

3. Un capteur de pression selon l'une quelconque de la revendication 1 ou revendication 2 **caractérisé en ce que** ladite chambre de pression (10) au sein du boîtier (1) est disposée derrière l'élément de mesure (7) par rapport à la direction de la pression (D0).

4. Un capteur de pression selon l'une quelconque de la revendication 1 ou revendication 2 **caractérisé en ce que** ladite chambre de pression (10) est disposée entre la membrane (3) et l'élément de mesure (7).

5. Un capteur de pression selon l'une quelconque des revendications précédentes **caractérisé en ce que** ledit système de canaux (11, 15, 10) au moins comprend une ligne d'amenée (11) et une ligne (15) de vidange du milieu.

6. Un capteur de pression selon l'une quelconque des revendications précédentes **caractérisé en ce que** ledit système de canaux (11, 15, 10) au moins comprend une vanne, préférentiellement deux vannes (16, 17) pour ouvrir et fermer le système de canaux (11, 15, 10).

7. Un capteur de pression selon l'une quelconque des revendications précédentes **caractérisé en ce que** ledit système de canaux (11, 15, 10) au moins comprend un senseur et préférentiellement deux senseurs (19) pour mesurer des températures, des pressions et/ou des débits dans le système de canaux (11, 15, 10).

8. Un procédé pour l'essai de la qualité d'un capteur selon l'une quelconque des revendications précédentes **caractérisé en ce que**, à une pression extérieure (D0) connue sur la membrane (3)
a) le milieu d'essai (12) au sein du système de canaux (11, 15, 10) est pressurisé avec la pression d'essai Dp prédéterminée,
b) le changement de la pression D2 généré par la pression d'essai Dp sur l'élément de mesure (7) est déterminé et est comparé avec le changement de la pression D1, attendu et connu, dans l'élément de mesure (7),
c) et **en ce qu'**ensuite des valeurs d'étalonnage du capteur de pression sont ajustées par rapport à la différence de pression D2 - D1 déterminés.
